# EUROPEAN PATENT APPLICATION

(11) **EP 4 636 547 A1**
(43) Date of publication of application: **22.10.2025**
(21) Application number: 25163208.9
(22) Date of filing: 12.03.2025
(51) Int. Cl.: G06F 3/01, G06F 3/0354

(54) **INFORMATION PROCESSING SYSTEM, INFORMATION PROCESSING METHOD, AND PROGRAM**

(30) Priority: 19.04.2024 JP 2024068122
(71) Applicant: Lenovo (Singapore) Pte. Ltd., New Tech Park 556741 (SG)
(72) Inventor: YOSHITOMI, Keiichi, Yokohama-shi, 220-0012 (JP)
(74) Representative: Openshaw & Co.

(57) **Abstract**

An object of the present invention is to create a sensation similar to that of actually writing on a writing medium.

An information processing system includes a contact parameter detection unit configured to detect one or more contact parameters corresponding to a contact state of a pen-shaped input device with respect to an operation target surface, and a feedback control unit configured to derive a feedback level corresponding to a writing instrument type set for the pen-shaped input device based on the detected contact parameter and drive a tactile sensation reproduction part in the pen-shaped input device based on the derived feedback level.

## Description

### BACKGROUND OF THE INVENTION

### Field of the Invention

The present invention relates to an information processing system, an information processing method, and a program.

### Description of the Related Art

It is known that a pen-like stylus (pen-shaped input device) capable of providing tactile feedback by generating a vibration through drive of a tactile actuator is used as an input device when performing input to an interactive display system (for example, see Japanese Unexamined Patent Application Publication (Translation of PCT Application) No. 2017-537395).

### SUMMARY OF THE INVENTION

Since a tactile sensation of sliding a pen tip on a writing medium such as paper is obtained in a simulated manner by emitting a vibration from the pen-shaped input device, a user who performs input using the pen-shaped input device is capable of obtaining a sensation similar to that of writing on the writing medium.

When performing input using the pen-shaped input device, there is an aspect that it is preferable for a sensation to be as close as possible to that of writing on a real writing medium.

In consideration of the above-described problem, an object of the present invention is to create a sensation similar to that of actually writing on a writing medium when performing input using a pen-shaped input device.

An information processing system according to a first aspect of the present invention for solving the above-described problem includes: a contact parameter detection unit configured to detect one or more contact parameters corresponding to a contact state of a pen-shaped input device with respect to an operation target surface; and a feedback control unit configured to derive a feedback level corresponding to a writing instrument type set for the pen-shaped input device based on the detected contact parameter and drive a tactile sensation reproduction part in the pen-shaped input device based on the derived feedback level.

An information processing method for an information processing system according to a second aspect of the present invention includes: a contact parameter detection step of, via a contact parameter detection unit, detecting one or more contact parameters corresponding to a contact state of a pen-shaped input device with respect to an operation target surface; and a feedback control step of, via a feedback control unit, deriving a feedback level corresponding to a writing instrument type set for the pen-shaped input device based on the detected contact parameter and drive a tactile sensation reproduction part in the pen-shaped input device based on the derived feedback level.

A program according to a third aspect of the present invention causes a computer in an information processing system to function as: a contact parameter detection unit configured to detect one or more contact parameters corresponding to a contact state of a pen-shaped input device with respect to an operation target surface; and a feedback control unit configured to derive a feedback level corresponding to a writing instrument type set for the pen-shaped input device based on the detected contact parameter and drive a tactile sensation reproduction part in the pen-shaped input device based on the derived feedback level.

The above-described aspects of present invention can create a sensation similar to that of actually writing on a writing medium when performing input using a pen-shaped input device.

### BRIEF DESCRIPTION OF THE DRAWINGS

FIG. 1 is a diagram illustrating an external configuration example of an information processing system in the present embodiment.
FIG. 2 is a diagram illustrating writing reaction level characteristics in the present embodiment for each writing instrument type.
FIG. 3 is a diagram illustrating a hardware configuration example of an information processing apparatus and the pen-shaped input device in the present embodiment.
FIG. 4 is a diagram illustrating a functional configuration example of the information processing apparatus and the pen-shaped input device in the present embodiment.
FIG. 5 is a diagram illustrating an example of a feedback table in the present embodiment.
FIG. 6 is a diagram illustrating an example of vibration waveform data stored in a vibration waveform data storage in the present embodiment.
FIG. 7 is a diagram illustrating an example of writing sound data stored in a writing sound data storage in the present embodiment.
FIG. 8 is a diagram illustrating a functional configuration example related to drive of a vibration unit and a sound output unit in the information processing system of the present embodiment.
FIG. 9 is a diagram illustrating an example of a processing procedure executed by the information processing apparatus and the pen-shaped input device in the present embodiment in relation to tactile feedback.

### DETAILED DESCRIPTION OF THE INVENTION

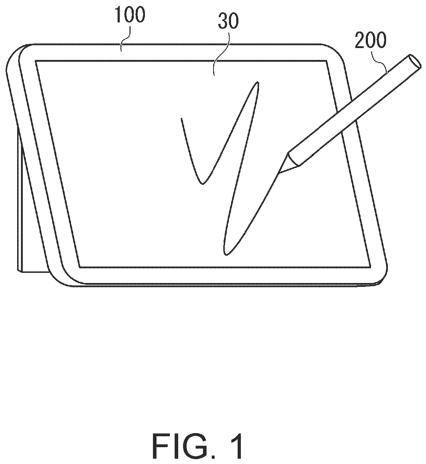

FIG. 1 illustrates an external configuration example of an information processing system of the present embodiment. As illustrated in FIG. 1, the information processing system of the present embodiment includes an information processing apparatus 100 and a pen-shaped input device 200.

The information processing apparatus 100 is capable of executing information processing in response to an input operation performed by the pen-shaped input device 200. The information processing apparatus 100 in FIG. 1 is an example of a tablet terminal, a laptop personal computer, or the like.

The information processing apparatus 100 includes a touch panel display unit 30. The touch panel display unit 30 is a part in which a touch panel and a display are combined. The touch panel display unit 30 displays an image on a panel surface (display surface: an example of an operation target surface), and is capable of being operated by bringing an operating body such as a pen-shaped input device or a finger into contact with the panel surface.

The pen-shaped input device 200 is a pen-shaped input device that is used by a user to perform an operation on the touch panel of the touch panel display unit 30 of the information processing apparatus 100.

The user grips the pen-shaped input device 200 and moves a pen tip to be in contact with the panel surface of the touch panel display unit 30, thereby performing a handwritten input operation of a character, a picture, a figure, or the like.

As the operation using the pen-shaped input device 200, a pointing operation on a user interface image displayed on the touch panel display unit 30 and the like may also be possible.

A detection method of the pen-shaped input device 200 through the touch panel of the touch panel display unit 30 of the present embodiment is not particularly limited, and examples thereof include a capacitive method, an electromagnetic induction method, and the like. In the following description, a case where a capacitive method is used will be described as an example.

An application that enables an input operation using the pen-shaped input device 200 (pen operation-enabled application) is installed in the information processing apparatus 100.

The pen operation-enabled application may be able to, for example, execute processing of displaying, on the touch panel display unit 30, characters or drawings drawn in response to a handwritten input operation such as character input or drawing performed by bringing the pen tip of the pen-shaped input device 200 into contact with the touch panel display unit 30, processing of converting the characters or drawings drawn by the operation into data, or the like.

In addition, the pen operation-enabled application of the present embodiment is capable of setting the writing instrument type when performing the writing operation of the pen-shaped input device 200. Specifically, examples of the writing instrument type include a pencil, a ballpoint pen, a crayon, a sign pen, a brush pen, and the like. The pen operation-enabled application is to perform drawing with a handwriting trace corresponding to the set writing instrument type in response to the writing operation of the pen-shaped input device 200.

In addition, in the information processing system of the present embodiment, the pen-shaped input device 200 emits a vibration and a sound (writing sound) in response to an operation (writing operation) performed in accordance with writing. The vibration and writing sound emitted by the pen-shaped input device 200 allow the user to feel a tactile sensation similar to that of writing on a writing medium such as paper, thereby enabling the user to obtain a sensation similar to that of writing on the writing medium with a real writing instrument.

In the following description, the generation of a vibration and a sound when the writing operation is being performed by the pen-shaped input device 200 is also referred to as "tactile feedback". In addition, control executed in response to the "tactile feedback" is also referred to as "feedback control".

Next, an outline of the feedback control in the present embodiment will be described.

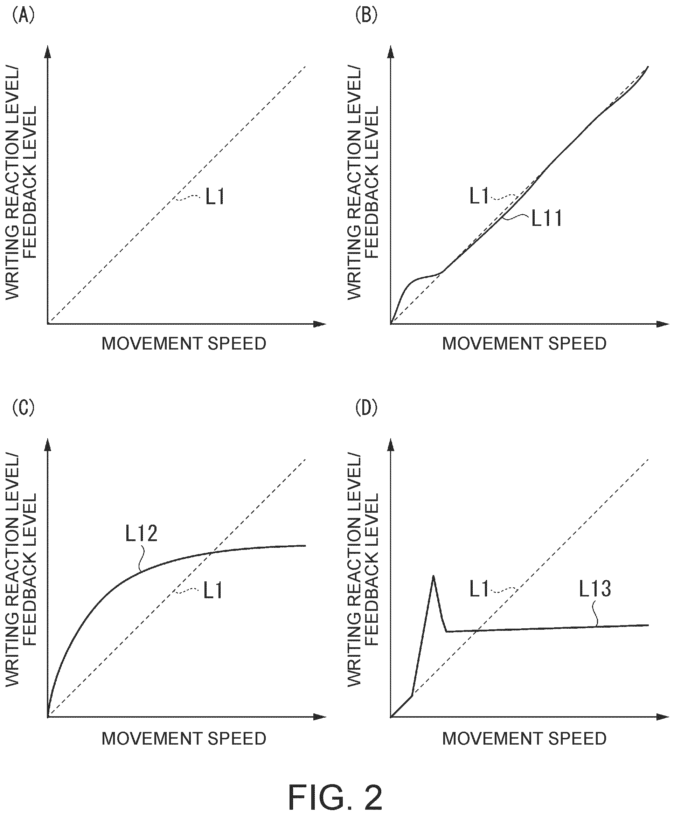

A line L1 in FIG. 2(A) indicates an example in which the feedback level (vibration level, writing sound level) is changed linearly with respect to an increase in the movement speed, which is one of the contact parameters, as an algorithm in the feedback control.

In general, in actual writing, as the movement speed of the writing instrument on the writing medium increases, the vibration or writing sound generated by the writing instrument also increases. Therefore, by performing the feedback control using the algorithm of FIG. 2(A), the vibration or writing sound of the pen-shaped input device 200 that moves on the panel surface in response to the writing operation changes according to the movement speed, making it possible to reproduce a tactile sensation that is somewhat close to reality.

The pen operation-enabled application of the present embodiment is capable of setting the writing instrument type as described above.

In actual writing, a change in the magnitude of the vibration of the writing instrument or the writing sound generated in response to the change in the movement speed varies depending on the type of the writing instrument used for writing.

Specifically, a line L11 in FIG. 2(B) indicates a writing reaction level for a writing instrument of a certain writing instrument type (first type) in reality. That is, the line L11 indicates the writing reaction level (the magnitude of the vibration or writing sound generated by the writing) with respect to the movement speed of the writing instrument of the first type. In addition, in FIG. 2(B), the line L1 is also illustrated for comparison with the line L11.

The writing instrument of the first type in FIG. 2(B) generates a writing reaction level higher than of that of the line L1 when the tip part starts moving, but thereafter, in a state where the movement speed reaches a certain level or higher, a writing reaction level that is linear with the movement speed is obtained, as in the line L1.

In addition, a line L12 in FIG. 2(C) indicates a relationship between a movement speed and a writing reaction level for a writing instrument of a certain writing instrument type (second type) in reality. In FIG. 2(C), the line L1 is also illustrated for comparison with the line L12.

According to FIG. 2(C), the writing instrument of the second type generates a writing reaction level higher than that of the line L1 is generated in a range of a certain degree of movement speed after the tip part starts moving, but the increase in the writing reaction level is changed to be gentle with respect to the subsequent increase in the movement speed.

In addition, a line L13 in FIG. 2(D) indicates a relationship between a movement speed and a writing reaction level for a writing instrument of a certain writing instrument type (third type) in reality. In addition, in FIG. 2(D), the line L1 is also illustrated for comparison with the line L13. Such a relationship between the movement speed and the writing response level may be obtained by measurement or may be based on previous knowledge. According to FIG. 2(D), in the writing instrument of the third type, the change in the writing reaction level with respect to the movement speed is linear in a short period immediately after the tip part starts moving, but as the movement speed further increases, the writing reaction level rises sharply due to friction of the tip part against the writing medium, and in a case where the movement speed further increases, the writing reaction level sharply falls and then remains almost constant regardless of the movement speed at a certain writing reaction level.

The relationship between the movement speed and the writing response level shown by the lines L11, L12, L13, and the like may be obtained by measurement or may be based on previous knowledge. When obtaining the relationship by measurement, for example, a method may be adopted in which the writing instrument is actually moved on a certain writing medium so that the movement speed increases from a state where the movement speed is zero, and the level of the vibration generated by the writing instrument and the level of the writing sound are measured during the movement.

As understood from FIGS. 2(B), 2(C), and 2(D), the writing reaction level generated by an actual writing instrument may deviate from FIG. 2(A). Therefore, the information processing system of the present embodiment is configured to perform the feedback control such that the deviation as described above is canceled. By performing the feedback control in this way, when the writing operation is performed by the pen-shaped input device 200, the tactile feedback corresponding to the set writing instrument type is given. As a result, it is possible to achieve a tactile sensation similar to that experienced when writing is actually performed with a writing instrument of the same writing instrument type as that set in the pen operation-enabled application.

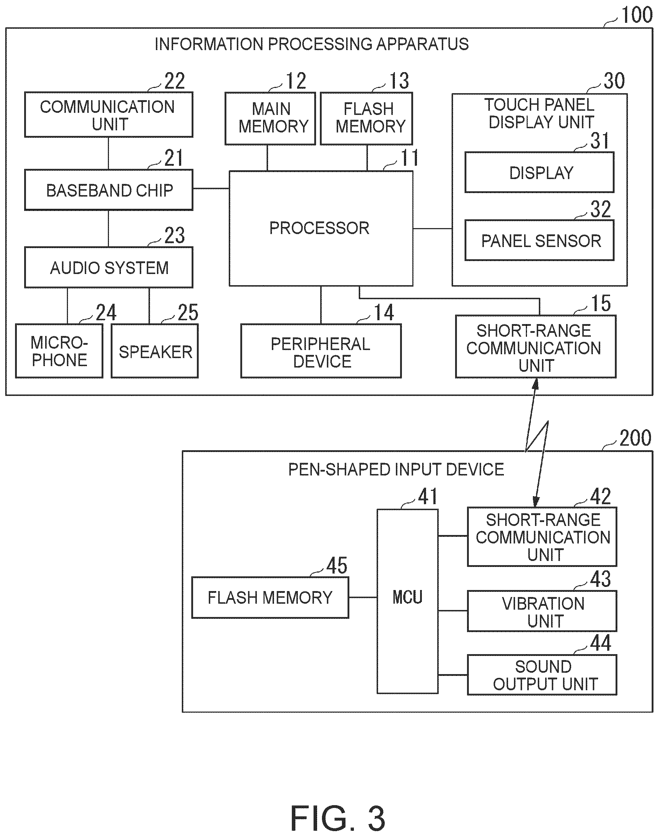

A hardware configuration example of the information processing apparatus 100 and the pen-shaped input device 200 will be described with reference to FIG. 3.

First, a hardware configuration example of the information processing apparatus 100 will be described. The information processing apparatus 100 in FIG. 3 includes a processor 11, a main memory 12, a flash memory 13, a peripheral device 14, a short-range communication unit 15, a baseband chip 21, a communication unit 22, an audio system 23, a microphone 24, a speaker 25, and the touch panel display unit 30.

The processor 11 is, for example, an application processor including a central processing unit (CPU). The processor 11 controls the entirety of the information processing apparatus 100.

The main memory 12 is a writable memory that is used as a reading area of an execution program of the processor 11 or as a work area in which processing data of the execution program is written. The main memory 12 includes, for example, a plurality of dynamic random access memory (DRAM) chips. The execution program includes an operating system (OS), various device drivers for hardware operation of peripheral devices, various services/utilities, an application program (application software), and the like.

The flash memory 13 is, for example, a flash electrically erasable programmable read only memory (EEPROM), and stores the OS, various drivers, various services/utilities, application program (hereinafter, referred to as an application), and various types of data.

The touch panel display unit 30 is a part that displays an image and allows an operation to be performed by the pen-shaped input device 200 with respect to the panel surface on which the image is displayed. The touch panel display unit 30 may be operated by an operating object other than the pen-shaped input device 200, such as a finger, but, here, a case where the operating object is the pen-shaped input device 200 will be described as an example.

The touch panel display unit 30 includes a display 31 and a panel sensor 32.

The display 31 is, for example, a liquid crystal display or an organic electro-luminescence (EL) display, and displays an image based on drawing data (display data) output from the processor 11.

The panel sensor 32 detects a contact state of the pen tip of the pen-shaped input device 200 with respect to a panel surface of the display 31. Specifically, the panel sensor 32 may be configured to detect a position on the panel surface where the pen tip of the pen-shaped input device 200 is in contact, a pressure applied by the pen tip in contact with the panel surface, a distance of the pen-shaped input device 200 from the panel surface, and the like. Such a detection method of the panel sensor 32 is not particularly limited, and examples thereof include a capacitive method, an electromagnetic induction method, and the like. In addition, the panel sensor 32 may have a configuration in which a plurality of such detection methods is used in combination.

The peripheral device 14 is, for example, a wireless local area network (WLAN) module, a global positioning system (GPS) module, and sensors such as an acceleration sensor, and the like.

The audio system 23 is, for example, an audio integrated circuit (IC), and inputs, records, reproduces, and outputs sound data. For example, the microphone 24 and the speaker 25 are connected to the audio system 23. The audio system 23 outputs, for example, sound data picked up by the microphone 24 to the processor 11 or the baseband chip 21.

In addition, the audio system 23 converts, for example, the sound data acquired from the processor 11 or the baseband chip 21 into a sound signal, and outputs the sound signal to the speaker 25.

The microphone 24 picks up a sound around the information processing apparatus 100. The microphone 24 picks up a sound such as user's voice for example, when performing audio fusion with another terminal.

The speaker 25 outputs various sounds to an outside of the information processing apparatus 100. The speaker 25 outputs (emits) a sound received from another terminal, for example, when performing audio fusion with the other terminal.

The baseband chip 21 is, for example, a dedicated IC that controls a wireless communication such as a 4th generation mobile communication system (4G) or a 5th generation mobile communication system (5G).

The baseband chip 21 outputs, for example, the sound data received by the communication unit 22 as a sound from the speaker 25 by the audio system 23.

In addition, the baseband chip 21 acquires, for example, the sound data picked up by the microphone 24 via the audio system 23 and causes the communication unit 22 to output the sound data via the mobile communication system. In addition, the baseband chip 21 may transmit and receive input and output data for data communication via the mobile communication system to and from the processor 11.

The communication unit 22 is a wireless communication device including an antenna for performing wireless communication via the mobile communication system.

The short-range communication unit 15 is, for example, a Bluetooth (registered trademark) module, and performs short-range wireless communication with the pen-shaped input device 200.

Next, a hardware configuration example of the pen-shaped input device 200 will be described with reference to FIG. 3.

The pen-shaped input device 200 includes a micro controller unit (MCU) 41, a short-range communication unit 42, a vibration unit 43 (an example of a tactile sensation reproduction part), a sound output unit 44 (an example of a tactile sensation reproduction part), and a flash memory 45.

The short-range communication unit 42 is, for example, a Bluetooth (registered trademark) module, and performs short-range wireless communication with the information processing apparatus 100.

The MCU 41 includes a CPU, a memory such as a ROM or a RAM, I/O-related components, and the like, and executes control of the pen-shaped input device 200. The MCU 41 transmits and receives information transmitted and received by the short-range communication unit 42. In addition, the MCU 41 controls the generation of the vibration in the vibration unit 43 and the output of the writing sound from the sound output unit 44 such that the tactile feedback based on feedback control information transmitted from the information processing apparatus 100 is performed.

The vibration unit 43 is a part that includes, for example, an actuator and that vibrates in response to the control of the MCU 41.

The sound output unit 44 is a part that includes, for example, a speaker and that outputs a writing sound in response to the control of the MCU 41.

The flash memory 45 stores various types of data corresponding to the pen-shaped input device 200, such as a program.

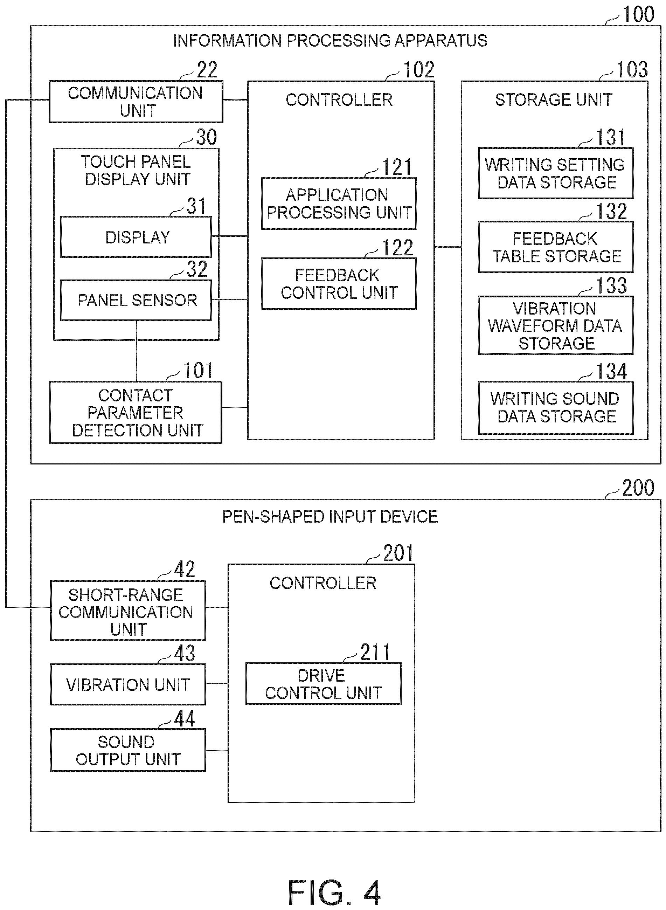

A functional configuration example of the information processing apparatus 100 and the pen-shaped input device 200 will be described with reference to FIG. 4. In FIG. 4, functional units that can be regarded as being equivalent to the parts in the hardware configuration of FIG. 3 are denoted by the same reference numerals as those in FIG. 3, and the description thereof will be appropriately omitted.

The functions of the information processing apparatus 100 illustrated in FIG. 4 may be realized by the processor 11 (FIG. 3) executing a program.

First, a functional configuration example of the information processing apparatus 100 will be described. The information processing apparatus 100 includes, as functional units, the communication unit 22, the touch panel display unit 30, a contact parameter detection unit 101, a controller 102, and a storage unit 103.

The contact parameter detection unit 101 detects a contact state of the pen tip of the pen-shaped input device 200 with respect to the panel surface of the touch panel display unit 30.

The contact parameter detection unit 101 outputs a parameter (contact parameter) detected in response to the contact state based on a detection signal output by the panel sensor 32. In the following description, a case where the contact parameter is, for example, the movement speed, the pen pressure, the movement direction, and the inclination angle, which are described above, will be described.

The controller 102 executes various types of control in the information processing apparatus 100. The controller 102 includes an application processing unit 121 and a feedback control unit 122.

The application processing unit 121 executes processing corresponding to the pen operation-enabled application.

When the writing operation of the pen-shaped input device 200 is performed as an operation for the pen operation-enabled application, pen operation information is input from the panel sensor 32 to the application processing unit 121. The application processing unit 121 performs processing such as drawing in response to the input of the pen operation information.

In addition, as described above, in the application of the present embodiment is capable of setting the writing instrument type corresponding to the writing operation. The setting of the writing instrument type may be performed, for example, by the user designating the writing instrument type, or may be set by the application processing unit 121 in response to the selection of the writing medium.

The feedback control unit 122 executes feedback control. The feedback control in the present embodiment is control of causing the pen-shaped input device 200 to generate a vibration and a writing sound as the tactile feedback.

The feedback control unit 122 of the present embodiment executes feedback control in real time based on the contact parameter detected by the contact parameter detection unit 101.

In addition, the feedback control unit 122 performs feedback control corresponding to the set writing instrument type. That is, the feedback control unit 122 generates feedback control information including a feedback level (vibration or writing sound level) set with reference to a feedback table (an example of table information) corresponding to the set writing instrument type and signal source data (vibration waveform data and writing sound data) corresponding to the set writing instrument type. The feedback control unit 122 outputs (transmits) the generated feedback control information to the pen-shaped input device 200 via the communication unit 22.

The storage unit 103 stores various types of information corresponding to the information processing apparatus 100. The storage unit 103 includes a writing setting data storage 131, a feedback table storage 132, a vibration waveform data storage 133, and a writing sound data storage 134.

The writing setting data storage 131 stores writing setting data. The writing setting data is setting information including information (writing instrument type data) indicating the writing instrument type set in response to the writing operation of the pen-shaped input device 200 through the pen operation-enabled application. The writing setting data may also include information (writing medium data) indicating the set writing medium.

The feedback table storage 132 stores a feedback table. The feedback table is a table showing a correspondence relationship between the movement speed and the feedback level for each writing instrument type.

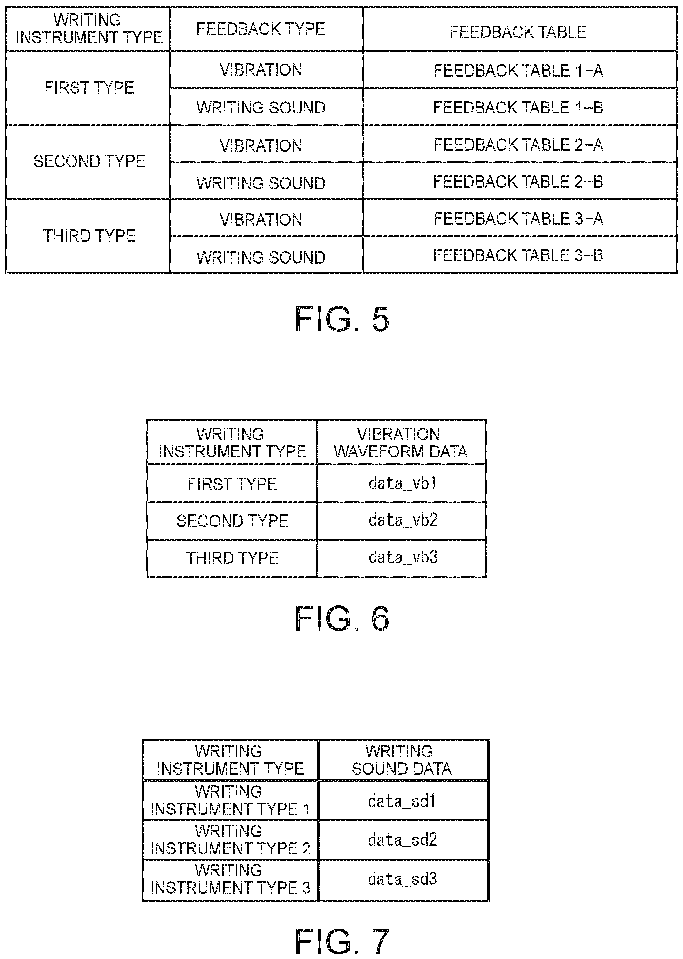

FIG. 5 illustrates an example of the feedback table stored in the feedback table storage 132. In FIG. 5, an example is illustrated in which the feedback table storage 132 stores two feedback tables corresponding to two feedback types of a vibration and a writing sound for each of three types of writing instruments of the first type to the third type. In the present embodiment, the number of the settable writing instrument types is not particularly limited. Here, a case where any one selected from three types of writing instruments of the first type to the third type can be set is described as an example. One feedback table that is commonly used for a vibration and a writing sound may be stored for one writing implement type.

Specifically, a feedback table 1-A corresponding to the vibration of the writing instrument of the first type may be a table created to associate the vibration-responsive feedback level with the movement speed based on the relationship between the movement speed and the writing reaction level of the vibration illustrated as the line L11 in FIG. 2(B).

In addition, a feedback table 1-B corresponding to the writing sound of the writing instrument of the first type may be a table created to associate the feedback level with the movement speed based on, for example, the relationship between the movement speed measured in advance and the writing reaction level as the writing sound.

In addition, a feedback table 2-A corresponding to the vibration of the writing instrument of the second type may be a table created to associate the vibration-responsive feedback level with the movement speed based on the relationship between the movement speed and the writing reaction level of the vibration illustrated as the line L12 in FIG. 2(C).

In addition, a feedback table 2-B corresponding to the writing sound of the writing instrument of the second type may be a table created to associate the feedback level with the movement speed based on, for example, the relationship between the movement speed measured in advance and the writing reaction level as the writing sound.

In addition, a feedback table 3-A corresponding to the vibration of the writing instrument of the third type may be a table created to associate the vibration-responsive feedback level with the movement speed based on the relationship between the movement speed and the writing reaction level of the vibration illustrated as the line L13 in FIG. 2(D).

In addition, a feedback table 3-B corresponding to the writing sound of the writing instrument of the third type may be a table created to associate the feedback level with the movement speed based on, for example, the relationship between the movement speed measured in advance and the writing reaction level as the writing sound.

The description will be returned to FIG. 4. The vibration waveform data storage 133 stores vibration waveform data.

FIG. 6 illustrates an example of the vibration waveform data stored in the vibration waveform data storage 133. In FIG. 6, an example is illustrated in which the vibration waveform data storage 133 stores the vibration waveform data in association with each of three types of writing instruments of the first type to the third type. The vibration waveform data corresponding to one writing instrument type is waveform data created to reproduce a vibration generated when writing is actually performed by a writing instrument of the corresponding writing instrument type.

The description will be returned to FIG. 4. The writing sound data storage 134 stores writing sound data.

FIG. 7 illustrates an example of the writing sound data stored in the writing sound data storage 134. In FIG. 7, an example is illustrated in which the writing sound data storage 134 stores the writing sound data in association with each of three types of writing instruments of the first type to the third type.

The writing sound data corresponding to one writing instrument type is audio data created to reproduce a writing sound generated when writing is actually performed by a writing instrument of the corresponding writing instrument type.

Next, a functional configuration example of the pen-shaped input device 200 will be described with reference to FIG. 4. The functions of the pen-shaped input device 200 illustrated in FIG. 4 may be realized by the MCU 41 (FIG. 5) executing a program.

The pen-shaped input device 200 includes, as functional units, the short-range communication unit 42, the vibration unit 43, the sound output unit 44, and a controller 201.

The controller 201 executes various types of control in the pen-shaped input device 200. The controller 201 includes a drive control unit 211.

The drive control unit 211 controls the vibration unit 43 such that a vibration as the tactile feedback is generated. In addition, the drive control unit 211 controls the sound output unit 44 such that a writing sound as the tactile feedback is generated.

In controlling the vibration unit 43 and the sound output unit 44, the drive control unit 211 uses the vibration waveform data, the writing sound data, and the feedback level included in the feedback control information transmitted from the information processing apparatus 100.

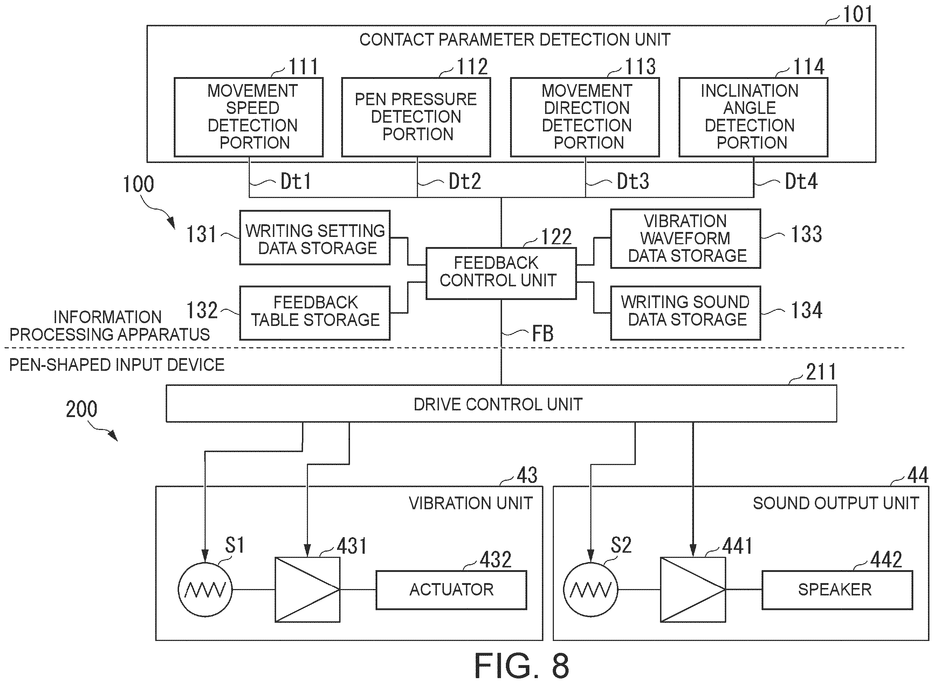

A functional configuration example related to the drive of the vibration unit 43 and the sound output unit 44 due to the feedback control information will be described with reference to FIG. 8.

In the information processing apparatus 100, the contact parameter detection unit 101 includes a movement speed detection portion 111, a pen pressure detection portion 112, a movement direction detection portion 113, and an inclination angle detection portion 114.

The movement speed detection portion 111 detects a movement speed of the pen tip that moves while in contact with the panel surface. The movement speed detection portion 111 may detect the movement speed based on a movement amount per unit time of the contact position of the pen tip detected by the panel sensor 32. The movement speed detection portion 111 outputs a movement speed parameter Dt1 indicating the detected movement speed to the feedback control unit 122.

The pen pressure detection portion 112 detects a pressure (pen pressure) of the pen tip in contact with the panel surface. The pen pressure detection portion 112 may detect the pen pressure based on a value of the electrostatic capacitance at the contact position of the pen tip detected by the panel sensor 32. The pen pressure detection portion 112 outputs a pen pressure parameter Dt2 indicating the detected pen pressure to the feedback control unit 122.

The movement direction detection portion 113 detects a movement direction of the pen tip that moves while in contact with the panel surface. The movement direction detection portion 113 may detect the movement direction based on a direction in which the contact position of the pen tip detected by the panel sensor 32 moves. The movement direction detection portion 113 outputs a movement direction parameter Dt3 indicating the detected movement direction to the feedback control unit 122.

The inclination angle detection portion 114 detects an inclination angle of a main body of the pen-shaped input device 200 with respect to the panel surface in a state where the pen tip is in contact with the panel surface. The inclination angle detection portion 114 may detect the inclination angle based on a distribution of the electrostatic capacitance according to the main body of the pen-shaped input device 200 detected by the panel sensor 32 in the vicinity of the contact position of the pen tip. The inclination angle detection portion 114 outputs an inclination angle parameter Dt4 indicating the detected inclination angle to the feedback control unit 122.

In the information processing apparatus 100, the feedback control unit 122 generates feedback control information FB.

The feedback control unit 122 recognizes the writing instrument type indicated by the writing setting data stored in the writing setting data storage 131. The feedback control unit 122 refers to the feedback table associated with the recognized writing instrument type among the feedback tables stored in the feedback table storage 132, and derives (acquires) the feedback level (vibration level, writing sound level) corresponding to the movement speed indicated by the movement speed parameter Dt1. In addition, the feedback control unit 122 may correct the feedback level corresponding to the movement speed by using all or a part of the other contact parameters (the pen pressure parameter Dt2, the movement direction parameter Dt3, and the inclination angle parameter Dt4).

The feedback level may be common to the vibration level and the writing sound level. In addition, the feedback control unit 122 acquires the vibration waveform data associated with the recognized writing instrument type from the vibration waveform data storage 133.

In addition, the feedback control unit 122 acquires the writing sound data associated with the recognized writing instrument type from the writing sound data storage 134.

The feedback control unit 122 generates feedback control information FB including the feedback level (vibration level and writing sound level), the vibration waveform data, and the writing sound data obtained as described above.

The feedback control unit 122 outputs (transmits) the generated feedback control information FB to the pen-shaped input device 200.

Next, a functional configuration example of the pen-shaped input device 200 will be described. The functions of the pen-shaped input device 200 illustrated in FIG. 8 may be realized by the MCU 41 (FIG. 5) executing a program.

The pen-shaped input device 200 includes, as functional units, the short-range communication unit 42, the vibration unit 43, the sound output unit 44, a controller 201, and a storage unit 203.

The controller 201 executes various types of control in the pen-shaped input device 200. The controller 201 includes a drive control unit 211.

The drive control unit 211 drives the vibration unit 43 and the sound output unit 44 based on the input feedback control information FB.

In FIG. 8, a configuration example of the vibration unit 43 and the sound output unit 44 is illustrated.

The vibration unit 43 includes an amplifier 431 and an actuator 432.

The drive control unit 211 inputs the vibration waveform data included as the signal source data in the received feedback control information FB to the amplifier 431 as a signal source S1. In addition, the drive control unit 211 instructs the amplifier 431 of the vibration level included as the feedback level in the received feedback control information FB. The amplifier 431 amplifies the input signal source S1 to the instructed vibration level and outputs the amplified signal to the actuator 432. The actuator 432 vibrates according to a waveform of the input signal source S1 and the instructed vibration level.

The sound output unit 44 includes, for example, an amplifier 441 and a speaker 442.

The drive control unit 211 inputs the writing sound data included as the signal source data in the received feedback control information FB to the amplifier 441 as a signal source S2. In addition, the drive control unit 211 instructs the amplifier 441 of the writing sound level included as the feedback level in the received feedback control information FB. The amplifier 441 amplifies the input signal source S2 to the instructed writing sound level and outputs the amplified signal to the speaker 442. The input signal source S2 is output from the speaker 442 as a writing sound at a level instructed by the drive control unit 211.

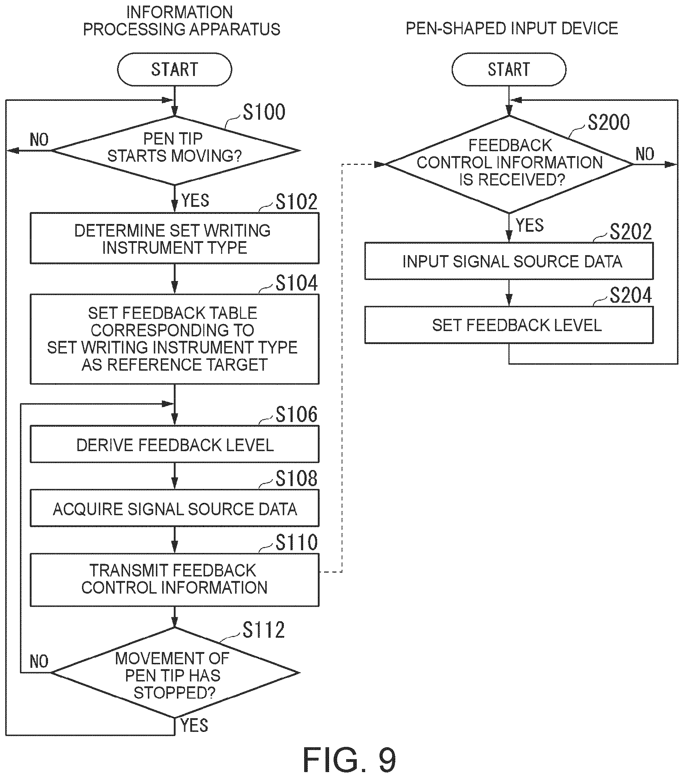

An example of a processing procedure executed by the information processing apparatus 100 and the pen-shaped input device 200 in relation to the tactile feedback will be described with reference to a flowchart of FIG. 9.

First, an example of a processing procedure of the information processing apparatus 100 will be described. The feedback control unit 122 is configured to, when the processing in FIG. 9 is being executed, acquire the contact parameter (the movement speed parameter Dt1, the pen pressure parameter Dt2, the movement direction parameter Dt3, and the inclination angle parameter Dt4) detected by the contact parameter detection unit 101, for example, for each predetermined acquisition cycle (acquisition period). In this case, the feedback control unit 122 may acquire the contact parameters of one sample for each acquisition cycle (period), or may acquire the contact parameters corresponding to each of a plurality of sample cycles.

First, an example of a processing procedure executed by the information processing apparatus 100 will be described.

Step S100: In the information processing apparatus 100, the feedback control unit 122 waits for the pen tip of the pen-shaped input device 200 to move from a stopped state in contact with the panel surface to a state where the pen tip starts moving (movement start state), based on the contact parameters acquired at the current sample timing.

In this case, the feedback control unit 122 may determine that the pen tip has started moving, for example, when the movement speed parameter Dt1 in the contact parameters has changed from zero to a value greater than zero. Alternatively, the feedback control unit 122 may determine that the pen tip has started moving in response to the movement direction parameter Dt3 changing from a value that does not indicate the movement direction to a value indicating a certain movement direction because the pen tip is not moving (stopped). In addition, the feedback control unit 122 may determine whether or not the movement of the pen tip has started by using the movement speed parameter Dt1 and the movement direction parameter Dt3 in combination.

Step S102: In a case where it is determined that the pen tip has started moving in step S100, the feedback control unit 122 refers to the writing setting data stored in the writing setting data storage 131 and determines the writing instrument type currently set by the pen operation-enabled application.

Step S104: The feedback control unit 122 sets the feedback table associated with the set writing instrument type determined in step S102 from among the feedback tables stored in the feedback table storage 132, as a reference target corresponding to the current movement of the pen tip.

Step S106: The feedback control unit 122 derives a feedback level based on the contact parameters acquired in the acquisition cycle corresponding to the current time point. Here, the feedback control unit 122 may derive two feedback levels corresponding to the feedback types of the vibration and the writing sound.

Specifically, for example, the feedback control unit 122 acquires a feedback level corresponding to each of the vibration and the writing sound associated with the movement speed parameter Dt1 in the currently acquired contact parameters from the feedback table of the vibration and the writing sound set as the reference target in step S104. The feedback level acquired in this way may be used as a derivation result of the feedback level.

Further, the feedback control unit 122 may correct the feedback level acquired from the feedback table as the reference target using all or a part of the contact parameters (the pen pressure parameter Dt2, the movement direction parameter Dt3, and the inclination angle parameter Dt4) other than the movement speed. The feedback level corrected in this way reflects, for example, a change in vibration or writing sound according to, for example, the pen pressure, the movement direction, the inclination angle, and the like of the current writing operation.

Step S108: The feedback control unit 122 acquires the signal source data. Specifically, the feedback control unit 122 acquires, as the signal source data, the vibration waveform data associated with the writing instrument type determined in step S102 from the vibration waveform data storage 133. In addition, the feedback control unit 122 acquires, as the signal source data, the writing sound data associated with the writing instrument type determined in step S102 from the writing sound data storage 134.

Step S110: The feedback control unit 122 generates feedback control information FB including the feedback level corresponding to each of the vibration and the writing sound derived in step S106 and the signal source data (vibration waveform data and writing sound data) acquired in step S108.

The feedback control unit 122 transmits the generated feedback control information FB to the pen-shaped input device 200.

Step S112: The feedback control unit 122 determines whether or not the movement of the pen tip started in step S100 has stopped. The feedback control unit 122 may determine that the movement of the pen tip has stopped in response to the fact that the movement speed parameter Dt1, which has been greater than 0 until the current time, is 0.

When it is determined that the pen tip is in a state (moving state) in which the pen tip is moving, that is, the movement is not stopped, the processing returns to step S106. In this case, the feedback control unit 122 thereafter repeatedly executes the processes of steps S106 to S110 until the movement of the pen tip is stopped. That is, the feedback control unit 122 executes, in a loop, a process of generating the feedback control information FB based on the contact parameters at the current time point and transmitting the generated feedback control information FB to the pen-shaped input device 200.

On the other hand, when it is determined that the movement of the pen tip has stopped, the processing returns to step S100. In a case where the processing returns to step S100 in this way, the transmission of the feedback control information FB to the pen-shaped input device 200 is stopped until the movement of the pen tip is started again.

Next, an example of a processing procedure executed by the pen-shaped input device 200 will be described.

Step S200: In the pen-shaped input device 200, the drive control unit 211 waits to receive the feedback control information FB transmitted from the information processing apparatus 100 in step S110.

Step S202: In a case where the feedback control information FB is received, the drive control unit 211 inputs the vibration waveform data included as the signal source data in the received feedback control information FB to the amplifier 431 as the signal source S1. In addition, the drive control unit 211 inputs the writing sound data included as the signal source data in the received feedback control information FB to the amplifier 441 as the signal source S2.

Step S204: In addition, the feedback control unit 122 sets two feedback levels corresponding to the vibration and the writing sound included in the received feedback control information FB to the amplifiers 431 and 441, respectively.

Hereinafter, a modification example of the present embodiment will be described.

In the above-described embodiment, in deriving the feedback level, a feedback table in which the feedback level is associated with the movement speed is used. However, a feedback table corresponding to each of the pen pressure, the movement direction, and the inclination angle, which are the contact parameters other than the movement speed, may be provided. In addition, the feedback control unit 122 may derive the feedback level by referring to one or more feedback tables corresponding to any one or more contact parameters of the movement speed, the pen pressure, the movement direction, and the inclination angle.

In addition, the feedback control unit 122 may derive the feedback level by computation using a predetermined contact parameter such as the movement speed, instead of referring to the feedback table.

The tactile feedback may be performed by any one of the vibration or sound. In this case, the information processing apparatus 100 and the pen-shaped input device 200 may have a configuration corresponding to one of the tactile feedback of the vibration and the tactile feedback of the sound, and may not have a configuration corresponding to the other tactile feedback. Alternatively, for example, whether to use vibration or sound for the tactile feedback may be set according to a selection operation of the user, or a type of a writing instrument or a type of a writing target medium, which is set in the pen operation-enabled application.

The pen-shaped input device 200 may be provided with a predetermined functional unit included in the information processing apparatus 100 in the above-described embodiment. Alternatively, the information processing apparatus 100 may be provided with a predetermined functional unit included in the pen-shaped input device 200 in the above-described embodiment.

As a specific example, the pen-shaped input device 200 may be provided with the feedback control unit 122. In this case, the information processing apparatus 100 may be configured to transmit the contact parameter detected by the contact parameter detection unit 101 to the pen-shaped input device 200.

In addition, for example, at least one of the vibration waveform data storage 133 or the writing sound data storage 134 may be stored in the pen-shaped input device 200.

In this case, the feedback control information FB transmitted from the information processing apparatus 100 may include information for designating the writing instrument type corresponding to the vibration waveform data and the writing sound data used for the output of the vibration and the writing sound in the pen-shaped input device 200, and the feedback level corresponding to each of the vibration and the writing sound.

A program for realizing the functions as the information processing apparatus 100, the pen-shaped input device 200, and the like described above may be recorded on a computer-readable recording medium, and the program recorded on the recording medium may be read into a computer system and executed to perform the processing as the information processing apparatus 100, the pen-shaped input device 200, and the like described above. Here, the expression "the program recorded on the recording medium is read into the computer system and executed" includes installation of the program on the computer system. The term "computer system" herein includes the OS or hardware such as peripheral devices. In addition, the term "computer system" may include a plurality of computer apparatuses connected via a network including a communication line such as the Internet, a WAN, a LAN, or a dedicated line. In addition, the term "computer-readable recording medium" refers to a portable medium such as a flexible disk, a magneto-optical disk, a ROM, or a CD-ROM, and a storage device such as a hard disk built in the computer system. As described above, the recording medium that stores the program may be a non-transitory recording medium such as a CD-ROM. In addition, the recording medium also includes an internal or external recording medium that is accessible from a distribution server to distribute the program. The code of the program stored in the recording medium of the distribution server may be different from the code of the program in a format executable by a terminal device. That is, as long as the program can be downloaded from the distribution server and installed in a format executable by the terminal device, the format in which the program is stored in the distribution server does not matter. A configuration may be used in which the program is divided into a plurality of parts, and the divided parts are combined in the terminal device after being downloaded at different timings, or a distribution server for distributing the respective divided programs may be different. The term "computer-readable recording medium" further includes a medium that holds the program for a certain time, such as a volatile memory (RAM) in the computer system as a server or a client in a case where the program is transmitted via the network. In addition, the above-described program may be a program for realizing a part of the above-described functions. Further, the program may be a so-called difference file (difference program) in which the above-described functions can be realized in combination with the program already recorded in the computer system.

### Description of Symbols

- 30: touch panel display unit
- 31: display
- 32: panel sensor
- 43: vibration unit
- 44: sound output unit
- 100: information processing apparatus
- 101: contact parameter detection unit
- 102: controller
- 103: storage unit
- 111: movement speed detection portion
- 112: pen pressure detection portion
- 113: movement direction detection portion
- 114: inclination angle detection portion
- 121: application processing unit
- 122: feedback control unit
- 131: writing setting data storage
- 132: feedback table storage
- 133: vibration waveform data storage
- 134: writing sound data storage
- 200: pen-shaped input device
- 201: controller
- 203: storage unit
- 211: drive control unit

## Claims

1. An information processing system comprising:
a contact parameter detection unit configured to detect one or more contact parameters corresponding to a contact state of a pen-shaped input device with respect to an operation target surface; and
a feedback control unit configured to derive a feedback level corresponding to a writing instrument type set for the pen-shaped input device based on the detected contact parameter and drive a tactile sensation reproduction part in the pen-shaped input device based on the derived feedback level.

2. The information processing system according to claim 1, wherein the feedback control unit is configured to derive the feedback level by acquiring a feedback level corresponding to the detected contact parameter from table information indicating a correspondence relationship between a value of a respective one or more contact parameters and the feedback level corresponding to the set writing instrument type.

3. The information processing system according to claim 1 or 2, wherein the one or more contact parameters are all or a part of a speed at which a pen tip of the pen-shaped input device moves on the operation target surface, a pressure of the pen tip on the operation target surface, a direction in which the pen tip moves on the operation target surface, and an inclination angle of the pen-shaped input device with respect to the operation target surface.

4. The information processing system according to claim 1 or 2, wherein the tactile sensation reproduction part includes a vibration unit configured to generate a vibration in response to input of a signal source.

5. The information processing system according to claim 1 or 2, wherein the tactile sensation reproduction part includes a sound output unit configured to output a sound in response to input of a signal source.

6. An information processing method for an information processing system, the method comprising:
a contact parameter detection step of, via a contact parameter detection unit, detecting one or more contact parameters corresponding to a contact state of a pen-shaped input device with respect to an operation target surface; and
a feedback control step of, via a feedback control unit, deriving a feedback level corresponding to a writing instrument type set for the pen-shaped input device based on the detected contact parameter and drive a tactile sensation reproduction part in the pen-shaped input device based on the derived feedback level.

7. The information processing method according to claim 6, comprising deriving the feedback level by acquiring a feedback level corresponding to the detected contact parameter from table information indicating a correspondence relationship between a value of a respective one or more contact parameters and the feedback level corresponding to the set writing instrument type.

8. The information processing method according to claim 6 or 7, wherein the one or more contact parameters are all or a part of a speed at which a pen tip of the pen-shaped input device moves on the operation target surface, a pressure of the pen tip on the operation target surface, a direction in which the pen tip moves on the operation target surface, and an inclination angle of the pen-shaped input device with respect to the operation target surface.

9. The information processing method according to claim 6 or 7, wherein the tactile sensation reproduction part includes a vibration unit that generates a vibration in response to input of a signal source.

10. The information processing method according to claim 6 or 7, wherein the tactile sensation reproduction part includes a sound output unit that outputs a sound in response to input of a signal source.

11. A program for causing a computer in an information processing system to function as:
a contact parameter detection unit configured to detect one or more contact parameters corresponding to a contact state of a pen-shaped input device with respect to an operation target surface; and
a feedback control unit configured to derive a feedback level corresponding to a writing instrument type set for the pen-shaped input device based on the detected contact parameter and drive a tactile sensation reproduction part in the pen-shaped input device based on the derived feedback level.
